Europäisches Patentamt

European Patent Office

Office européen des brevets

(19)

(11) Veröffentlichungsnummer: **0 310 841**
**B1**

(12) **EUROPÄISCHE PATENTSCHRIFT**

(45) Veröffentlichungstag der Patentschrift: **16.01.91**

(21) Anmeldenummer: **88115264.9**

(22) Anmeldetag: **17.09.88**

(51) Int. Cl.⁵: **F 16 K 11/065,** F 16 K 3/02

(54) Dreiwegearmatur.

(30) Priorität: **22.09.87 DE 3731754**

(43) Veröffentlichungstag der Anmeldung:
**12.04.89 Patentblatt 89/15**

(45) Bekanntmachung des Hinweises auf die
Patenterteilung:
**16.01.91 Patentblatt 91/03**

(84) Benannte Vertragsstaaten:
**AT CH ES FR GB IT LI NL**

(56) Entgegenhaltungen:
DE-A-2 047 888
FR-A-2 407 410
GB-A-2 151 753
US-A-3 521 674

(73) Patentinhaber: **METALPRAECIS BERCHEM +
SCHABERG GESELLSCHAFT FÜR
METALLFORMGEBUNG MIT BESCHRÄNKTER
HAFTUNG**
**Osterfeldstrasse 14**
**D-4650 Gelsenkirchen-Ückendorf (DE)**

(72) Erfinder: **Berchem, Rütger, Dipl.-Ing. Dr. rer. pol.**
**Wallneyer Strasse 29**
**D-4300 Essen 1 (DE)**
Erfinder: **Prokscha, Georg**
**Richardstrasse 56**
**D-4630 Recklinghausen (DE)**

(74) Vertreter: **Andrejewski, Walter et al**
**Patentanwälte Dipl.-Phys. Dr. Walter
Andrejewski Dipl.-Ing. Dr.-Ing. Manfred Honke
Dipl.-Phys. Dr. Karl Gerhard Masch Theaterplatz
3, Postfach 10 02 54**
**D-4300 Essen 1 (DE)**

## Beschreibung

Die Erfindung bezieht sich gattungsgemäß auf eine Dreiwegearmatur, mit druckfestem Gehäuse, Ventilsitz, darin beweglich gehaltenem Absperrelement und durch eine Wellendichtung hindurchgeführtem Betätigungselement für das Absperrelement, wobei das Gehäuse mit drei Rohranschlußöffnungen und der Ventilsitz mit zugeordneten Anschlußbohrungen ausgebildet ist, wobei das Absperrelement eine Durchgangsbohrung aufweist, durch die zwei Rohranschlußöffnungen wechselweise mit der dritten Rohranschlußöffnung unter Bildung eines Durchgangskanals verbindbar sind, und wobei das Absperrelement in einer weiteren Steuerstellung die Rohranschlußöffnungen gegeneinander abdichtet.

Die bekannte gattungsgemäße Armatur ist als Kugelhahn mit einem aus einem Elastomer gefertigten Ventilsitz ausgebildet (GB—A 21 37 735). Durch Drehen der Ventilkugel sind die verschiedenen Steuerstellungen einstellbar. Um zu erkennen, welche der Rohranschlüßoffnungen miteinander verbunden sind, muß eine willkürlich zu treffende Vereinbarung getroffen werden, welche die Stellung des Handhebels dem Strömungsweg zuordnet. Hierbei ist die Gefahr einer Fehlbedienung gegeben, sie es, weil der Handhebel beim Einbau der Armatur falsch montiert wurde, oder sei es, weil der Anwender die willkürlich festgelegte Vereinbarung nicht kennt. Nachteilig ist bei der bekannten Dreiwegearmatur fernerhin, daß die Dichtflächen an der Ventilkugel relativ klein sind und insbesondere bei korrosiven und/oder abrasiven Medien eine ausreichende Standzeit nicht gewährleistet ist. Leckagen können zu erheblichen Problemen führen, wenn die Dreiwegearmatur zur Regelung oder Dosierung von Medien eingesetzt werden soll, die miteinander nicht in Berührung kommen dürfen.

Der Erfindung liegt die Aufgabe zugrunde, eine Dreiwegearmatur mit guten Abdichteigenschaften anzugeben, bei der die Gefahr einer Fehlbedienung klein ist. Im Ergebnis soll erreicht werden, daß bei der Dosierung oder Regelung von unterschiedlichen Medien eine unerwünschte Vermischung weder durch Fehlbedienung noch durch Leckage auftritt.

Diese Aufgabe wird dadurch gelöst, daß das Absperrelement als Schieberplatte ausgebildet ist und der Ventilsitz zwei Dichtungsscheiben aufweist, zwischen denen die Schieberplatte auf und nieder bewegbar angeordnet ist, daß die Dichtungsscheiben jeweils zwei mit Steuerabstand zueinander angeordnete Anschlußbohrungen aufweisen, wobei die Anschlußbohrungen der einen Dichtungsscheibe an eine gemeinsame Rohranschlußöffnung anschließen und den Anschlußbohrungen der anderen Dichtungsscheibe jeweils eine Rohranschlußöffnung zugeordnet ist und wobei der Steuerabstand mindestens doppelt so groß ist wie der Durchmesser der Durchgangsbohrung in der Schieberplatte.

In einer unteren Steuerstellung und in einer oberen Steuerstellung ist jeweils ein Strömungsweg freigegeben. In der mittleren Steuerstellung sind beide Durchgangswege abgesperrt. Bei der Betätigung der Schieberplatte erfolgt eine axiale Verstellung des Betätigungselementes. Anhand des Stellweges des Betätigungselementes ist die Steuerstellung erkennbar. Die Erfindung beruht auf der Erkenntnis, daß bei der erfindungsgemäßen Schieberarmatur die räumliche Zuordnung zwischen den Rohranschlußöffnungen und dem Stellweg des Betätigungselementes für den Fachmann erkennbar ist, ohne daß es einer besonderen Vereinbarung bedarf. Die Erfindung nutzt die Kinematik von Schieberarmaturen mit aufundnieder bewegbarer Schieberplatte in überraschender Weise zum Zwecke der Verbesserung der Sicherheit von Dreiwegearmaturen. Aufgrund der ebenen Dichtflächen zwischen Schieberplatte und Dichtungsscheiben läßt sich ferner eine gute Abdichtwirkung erreichen, und zwar—im Vergleich zu sphärisch geschliffenen Dichtflächen—bei geringerem fertigungstechnischen Aufwand.

Im Rahmen der Erfindung liegt es, daß die Dichtungsscheiben unterschiedlich ausgebildet sind und die an die gemeinsame Rohranschlußöffnung anschließende Dichtungsscheibe nur eine Anschlußbohrung aufweist, die sich von der unteren Steuerstellung bis zur oberen Steuerstellung hinweg erstreckt, wobei die Anschlußbohrung dieser Dichtungsscheibe rund oder auch schlitzförmig ausgebildet sein kann. Nach bevorzugter Ausführungsform der Erfindung sind die Dichtungsscheiben des Ventilsitzes jedoch identisch ausgebildet und weisen jeweils zwei Anschlußbohrungen im Steuerabstand auf, wobei die Anschlußbohrungen der einen Dichtungsscheibe an eine gemeinsame Rohranschlußöffnung anschließen und den Anschlußbohrungen der anderen Dichtungsscheibe jeweils eine Rohranschlußöffnung zugeordnet ist. Ein einfacher konstruktiver Aufbau der erfindungsgemäßen Dreiwegearmatur ist dadurch gekennzeichnet, daß das Gehäuse mit einem vorderen Gehäusedeckel und einem rückwärtigen Gehäusedeckel ausgebildet ist, daß der vordere Gehäusedeckel einen Sammelraum aufweist, von dem Bohrungen zu den Anschlußbohrungen der Dichtungsscheibe abgehen, und daß der rückwärtige Gehäusedeckel mit Strömungskanälen ausgerüstet ist, welche die Anschlußbohrungen der Dichtungsscheibe mit einer zugeordneten Rohranschlußöffnung verbinden. Dabei sind die Strömungsquerschnitte der Bohrungen des vorderen Gehäusedeckels und der Strömungskanäle im rückwärtigen Gehäusedeckel gleichgroß. Dadurch ist eine weitgehende Druckentlastung gegeben und ist der Einsatz der Armatur bei großen Betriebsdruckdifferenzen möglich. Diese Ausführungsform hat fernerhin den Vorteil, daß die Strömungsrichtung ohne weiteres umkehrbar ist und die Rohranschlußöffnung des vorderen Gehäusedeckels wahlweise die Einlaßseite oder Auslaßseite definiert. Insbesondere bei der Verwendung abrasiver und/oder korrosiver Medien empfiehlt die Erfindung, daß die Schieberplatte und die Dichtungsscheiben aus sinterkeramischem Werkstoff bestehen und daß die Dichtungsscheiben an elastomeren Gehäusedichtungen anliegen, die jeweils eine zugeordnete Anschlußbohrung ringförmig umschließen. Die elastomeren Gehäusedichtungen kommen mit den strömenden Medien nicht in Berührung und sind auch einer Scherbeanspruchung durch die Schieberplatte im Falle einer Betätigung der Schieberplatte nicht ausgesetzt. Es sind damit elastomere Dichtungen geringer Verschließfestigkeit einsetzbar. Die Werkstoffauswahl kann ausschießlich unter dem Gesichtspunkt der Korrosionsbeständigkeit und/oder Temperaturbeständigkeit getroffen werden. Der Steuerabstand zwischen den Anschlußbohrungen sollte nach bevorzugter Ausführungsform mindestens doppelt so groß sein wie der Durchmesser der Durchgangsbohrung in der Schieberplatte.

Die Vorteile der Erfindung sind zunächst darin zu sehen, daß die Gefahr einer Fehlbedienung aufgrund der leichten Zuordnung zwischen dem Stellweg des Betätigungselements und der räumlichen Anordnung der Rohranschlußöffnungen klein ist. Fernerhin zeichnet sich die erfindungsgemäße Dreiwegearmatur durch eine gute Abdichtung aus, und in der bevorzugten Ausführungsform mit sinterkeramischen Dichtungsscheiben und sinterkeramischer Schieberplatte ist sie auch bei korrosiven und/oder abrasiven Medien sowie in einem großen Temperaturbereich einsetzbar. Im Ergebnis ermöglicht die erfindungsgemäße Dreiwegearmatur das sichere Absperren, Dosieren und Regeln von unterschiedlichen Medien im Wechsel, die untereinander nicht in Berührung kommen dürfen. Dies gilt insbesondere auch für korrosive und abrasive Medien bei hoher Temperaturbeanspruchung.

Im folgenden wird die Erfindung anhand einer lediglich ein Ausführungsbeispiel darstellenden Zeichnung ausführlicher erläutert. Es zeigen in schematischer Darstellung

Fig. 1 einen Querschnitt durch die erfindungsgemäße Dreiwegearmatur,

Fig. 2 die geöffnete Dreiwegearmatur aus der Blickrichtung I in Fig. 1.

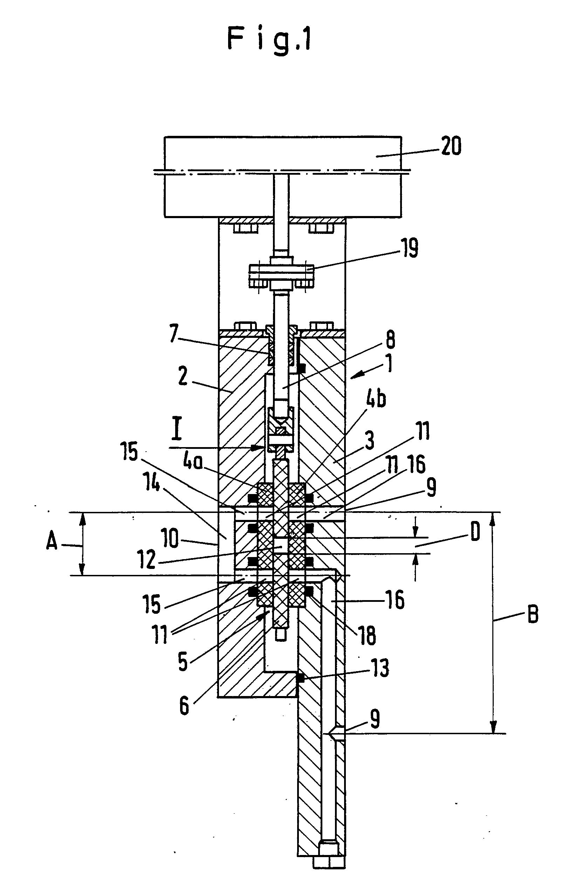

Zum grundsätzlichen Aufbau der in den Figuren dargestellten Dreiwegearmatur gehören ein druckfestes Gehäuse 1 mit vorderem Gehäusedeckel 2 und rückwärtigem Gehäusedeckel 3, ein aus zwei Dichtungsscheiben 4a, 4b bestehender Ventilsitz 5, darin beweglich gehaltenem Absperrelement 6 in Form einer Schieberplatte sowie ein durch eine Wellendichtung 7 des Gehäuses 1 hindurchgeführtes Betätigungselement 8 für die Schieberplatte 6. Insbesondere der Fig. 1 entnimmt man, daß das Gehäuse 1 mit drei Rohranschlußöffnungen 9, 10 ausgebildet ist, daß der Ventilsitz 5 zugeordnete Anschlußbohrungen 11 aufweist und das Absperrelement 6 eine Durchgangsbohrung 12 besitzt. Die Anordnung ist so getroffen, daß zwei Rohranschlußöffnungen 9 wechselweise mit der dritten Rohranschlußöffnung 10 unter Bildung eines Durchgangskanals verbindbar sind. Die Anschlußbohrungen 11 der Dichtungsscheiben 4 sind in einem Steuerabstand A angeordnet, der größer ist als der Durchmesser D der Durchgangsbohrung 12 der Schieberplatte 6. Dadurch kann das Absperrelement 6 eine weitere Steuerstellung, die in Fig. 1 dargestellt ist, einnehmen, in der die Rohranschlußöffnungen 9, 10 gegeneinander abgedichtet sind.

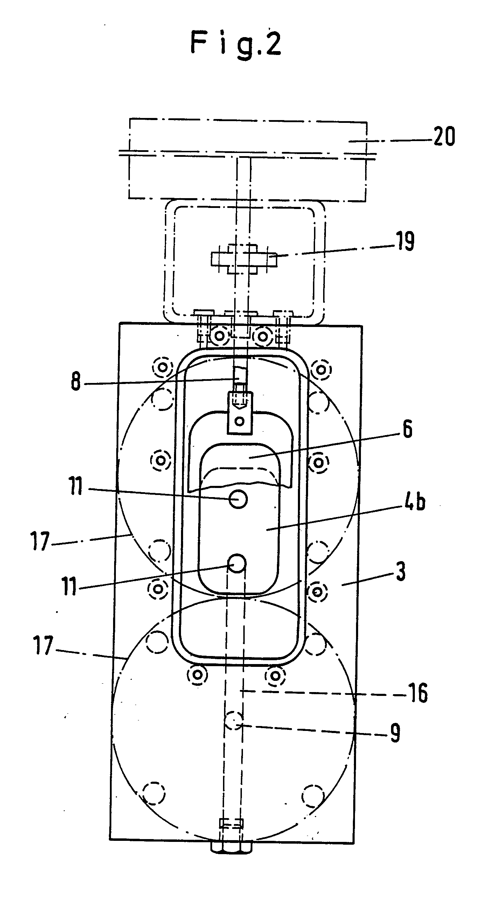

Im Ausführungsbeispiel ist das Gehäuse 1 zweiteilig ausgebildet. Der vordere Gehäusedeckel 2 sowie der rückwärtige Gehäusedeckel 3 sind unter Zwischenschaltung einer Deckeldichtung 13 miteinander verschraubt. Die Dichtungsscheiben 4a, 4b sind identisch ausgebildet. Der vordere Gehäusedeckel 2 weist einen Sammelraum 14 auf, der an die Rohranschlußöffnung 10 angrenzt und von dem Bohrungen 15 zu den Anschlußbohrungen 11 der Dichtungsscheibe 4a abgehen. Der rückwärtige Gehäusedeckel 3 ist mit Strömungskanälen 16 ausgerüstet, welche die Anschlußbohrungen 11 der Dichtungsscheibe 4b mit einer zugeordneten Rohranschlußöffnung 9 verbinden. Die Strömungsquerschnitte der Bohrungen 15 des vorderen Gehäusedeckels 2 und der Strömungskanäle 16 im rückwärtigen Gehäusedeckel 3 sind gleichgroß. Man entnimmt der Fig. 1, daß die Strömungskanäle 16 im rückwärtigen Gehäusedeckel 3 so angeordnet sind, daß die Rohranschlußöffnungen 9 einen für den Anschluß von Rohrleitungen erforderlichen Abstand B aufweisen. Wie in Fig. 2 angedeutet, sind die Gehäusedeckel 2, 3 mit Dichtungsflächen ausgebildet und können genormte Rohrflansche 17 angeschlossen werden.

Die Schieberplatte 6 und die Dichtungsscheiben 4a, 4b bestehen aus sinterkeramischem Werkstoff. Die Dichtungsscheiben 4a, 4b sind an elastomeren Gehäusedichtungen 18 abgestützt und liegen mit entsprechender Dichtkraft an der Schieberplatte 6 an. Die elastomeren Gehäusedichtungen 18 umschließen jeweils eine zugeordnete Anschlußbohrung 11 ringförmig. Vorzugsweise werden O-Ringdichtungen mit rundem oder quadratischem Querschnitt eingesetzt. Der Steuerabstand A zwischen den Anschlußbohrungen 11 ist mindestens doppelt so groß wie der Durchmesser D der Durchgangsbohrung 12 in der Schieberplatte C. Das Betätigungselement 8 ist mittels einer Kupplung 19 an eine Hubvorrichtung 20 angeschlossen.

**Patentansprüche**

1. Dreiwegearmatur, — mit
druckfestem Gehäuse (1),
Ventilsitz (5),
darin beweglich gehaltenem Absperrelement (6) und
durch eine Wellendichtung (7) hindurchgeführtem Betätigungselement (8) für das Absperrelement (6),
wobei das Gehäuse (1) mit drei Rohranschlußöffnungen (9, 10) und der Ventilsitz (5) mit zugeordneten Anschlußbohrungen (11) ausgebildet ist, wobei das Absperrelement (6) eine Durchgangsbohrung (12) aufweist, durch die zwei Rohranschlußöffnungen (9) wechselweise mit der dritten Rohranschlußöffnung (10) unter Bildung eines Durchgangskanals verbindbar sind, und wobei das Absperrelement (6) in einer weiteren Steuerstellung die Rohranschlußöffnungen (9, 10) gegeneinander abdichtet, dadurch gekennzeichnet, daß das Absperrelement als Schieberplatte (6) ausgebildet ist und der Ventilsitz (5) zwei Dichtungsscheiben (4a, 4b) aufweist, zwischen denen die Schieberplatte (6) auf und nieder bewegbar angeordnet ist, daß die Dichtungsscheiben (4a, 4b) jeweils zwei mit Steuerabstand (A) zueinander angeordnete Anschlußbohrungen (11) aufweisen, wobei die Anschlußbohrungen (11) der einen Dichtungsscheibe (4a) an eine gemeinsame Rohranschlußöffnung (10) anschließen und den Anschlußbohrungen (11) der anderen Dichtungsscheibe (4b) jeweils eine Rohranschlußöffnung (9) zugeordnet ist und wobei der Steuerabstand (A) mindestens doppelt so groß ist wie der Durchmesser (D) der Durchgangsbohrung (12) in der Schieberplatte (6).

2. Dreiwegearmatur nach dem Oberbegriff von Anspruch 1, dadurch gekennzeichnet, daß das Absperrelement als Schieberplatte (6) ausgebildet ist und der Ventilsitz (5) zwei Dichtungsscheiben (4a, 4b) aufweist, zwischen denen die Schieberplatte (6) zwischen einer unteren und oberen Steuerstellung auf und nieder bewegbar angeordnet ist, daß die eine Dichtungsscheibe (4a) eine Anschlußöffnung aufweist, die sich von der unteren Steuerstellung bis zur oberen Steuerstellung hinweg erstreckt und an eine Rohranschlußöffnung (10) angeschlossen ist und daß die andere Dichtungsscheibe (4b) zwei mit Steuerabstand (A) zueinander angeordnete Anschlußbohrungen (11) aufweist, denen jeweils eine Rohranschlußöffnung (9) zugeordnet ist, wobei der Steuerabstand (A) mindestens doppelt so groß ist wie der Durchmesser (D) der Durchgangsbohrung (12) in der Schieberplatte (6).

3. Dreiwegearmatur nach Anspruch 1, dadurch gekennzeichnet, daß das Gehäuse (1) mit einem vorderen Gehäsedeckel (2) und einem rückwärtigen Gehäusedeckel (3) ausgebildet ist, daß der vordere Gehäusedeckel (2) einen Sammelraum (14) aufweist, von dem Bohrungen (15) zu den Anschlußbohrungen (11) der Dichtungsscheibe (4a) abgehen, und daß der rückwärtige Gehäusedeckel (3) mit Strömungskanälen (16) ausgerüstet ist, welche die Anschlußbohrungen (11) der Dichtungsscheibe (4b) mit einer zugeordneten Rohranschlußöffnung (9) verbinden, wobei die Strömungsquerschnitte der Bohrungen (15) des vorderen Gehäusedeckels (2) und der Strömungskanäle (16) im rückwärtigen Gehäusedeckel (3) gleich groß sind.

4. Dreiwegearmatur nach einem der Ansprüche 1 bis 3, dadurch gekennzeichnet, daß die Schieberplatte (6) und die Dichtungsscheiben (4a, 4b) aus sinterkeramischem Werkstoff bestehen und daß die Dichtungsscheiben an elastomeren Gehäusedichtungen (18) anliegen, die jeweils eine zugeordnete Anschlußbohrung (11) ringförmig umschließen.

**Revendications**

1. Elément de robinetterie à trois voies, comportant

un boîtier (1) résistant à la pression,
un siège de vanne (5),
un élément d'obturation (6) retenu à l'état mobile dans le siège de vanne, et
un élément d'actionnement (8) traversant une garniture d'étanchéité d'arbre (7) et servant à manoeuvrer l'organe d'obturation (6), et

dans lequel le carter (1) comporte trois ouvertures tubulaires de raccordement (9, 10) et le siège de vanne (5) comporte des perçages associés de raccordement (11), l'organe d'obturation (6) possède un perçage traversant (12), au moyen duquel deux ouvertures tubulaires de raccordement (9) peuvent être réunies alternativement à la troisième ouverture tubulaire de raccordement (10) moyennant la formation d'un conduit de passage, et, dans une autre position de commande, l'organe d'obturation (6) sépare d'une manière étanche, les unes des autres, les ouvertures tubulaires de raccordement (9, 10), caractérisé en ce que l'organe d'obturation est réalisé sous la forme d'une plaque formant tiroir (6) et le siège de vanne (5) comporte deux disques d'étanchéité (4a, 4b), entre lesquels la plaque formant tiroir (6) est disposée de manière à être déplaçable verticalement en va-et-vient, que les disques d'étanchéité (4a, 4b) possèdent chacun deux perçages de raccordement (11), séparés l'un de l'autre par une distance de commande (A), les perçages de raccordement (11) d'un disque d'étanchéité (4a) se raccordant à une ouverture commune tubulaire de raccordement (10), tandis qu'une ouverture respective tubulaire de raccordement (9) est associée aux perçages de raccordement (11) de l'autre disque d'étanchéité (4b) et que la distance de commande (A) est égale au moins au double du diamètre (D) du perçage traversant (12) ménagé dans la plaque formant tiroir (6).

2. Elément de robinetterie à trois voies selon le préambule de la revendication 1, caractérisé en ce que l'organe d'obturation est réalisé sous la forme d'une plaque formant tiroir (6) et le siège de vanne (5) comporte deux disques d'étanchéité (4a, 4b), entre lesquels la plaque formant tiroir (6) est disposée de manière à être déplaçable verticalement en va-et-vient entre une position inférieure de commande et une position supérieure de commande, qu'un disque d'étanchéité (4a) possède une ouverture de raccordement, qui s'étend depuis la position inférieure de commande jusqu'à la position supérieure de commande et est raccordée à une ouverture tubulaire de raccordement (10), et que l'autre disque d'étanchéité (4b) possède deux perçages de raccordement (11), qui sont séparés l'un de l'autre par une distance de commande (A) et auxquels est associée respectivement une ouverture tubulaire de raccordement (9), la distance de commande (A) étant égale au moins au double du diamètre (D) du perçage traversant (12) ménagé dans la plaque formant tiroir (6).

3. Elément de robinetterie à trois voies selon la revendication 1, caractérisé en ce que le carter (1) est constitué d'un couvercle avant (2) et d'un couvercle arrière (3), que le couvercle avant (2) du carter possède un espace de collecte (14), à partir duquel des perçages (15) s'étendent en direction des perçages de raccordement (11) du disque d'étanchéité (4b), et que le couvercle arrière (3) du carter est équipé de canaux d'écoulement (16), qui relient les perçages de raccordement (11) du disque d'étanchéité (4b) à une ouverture associée tubulaire de raccordement (9), les sections transversales d'écoulement des perçages (15) du couvercle avant (2) du carter et des canaux d'écoulement (16) ménagés dans le couvercle arrière (3) du carter étant identiques.

4. Elément de robinetterie à trois voies selon l'une des revendications 1 à 3, caractérisé en ce que la plaque formant tiroir (6) et les disques d'étanchéité (4a, 4b) sont constitués par un matériau céramique fritté et que les disques d'étanchéité s'appliquent contre des garnitures d'étanchéité élastomères (18) du carter, qui entourent respectivement selon une disposition annulaire un perçage de raccordement (11) associé.

**Claims**

1. A three-way valve, — with
a pressure-tight housing (1),
a valve seating (5),
a shut-off unit (6) movably held therein, and
an actuation unit (8) for the shut-off unit (6) passing through a shaft packing (7),
in which the housing (1) is constructed with three pipe connector openings (9, 10) and the valve seating (5) is constructed with associated connection holes (11), in which the shut-off unit (6) possesses a through-hole (12) through which two pipe connector openings (9) are alternatively connectable to the third pipe connector opening (10) forming a through-channel, and in which in a further control position the shut-off unit (6) seals off the pipe connector openings (9, 10) from one another, characterized in that the shut-off unit is constructed as a sliding plate (6) and the valve seating (5) possesses two gaskets (4a, 4b) between which the sliding plate (6) is movable up and down, that each of the gaskets (4a, 4b) has two connection holes (11) located at a control spacing (A) from one another, by which the connection holes (11) of one gasket (4a) connect to a common pipe connector opening (10) and each of the connection holes (11) of the other gasket (4b) is associated with a pipe connector opening (9), and in which the control spacing (A) is at least twice as great as the diameter (D) of the through-hole (12) in the sliding plate (6).

2. A three-way valve according to the introductory section of Claim 1, characterized in that the shut-off unit is constructed as a sliding plate (6) and the valve seating (5) possesses two gaskets (4a, 4b) between which the sliding plate (6) is movable up and down between a lower and an upper control position, that one gasket (4a) possesses one connection hole, that extends all the way from the lower control position to the upper control position and is attached to a pipe connector opening (10) and that the other gasket (4b) possesses two connection holes (11) arranged at a control spacing (A) from one another, each of which is associated with a pipe connector opening (9), in which the control spacing (A) is at least twice as great as the diameter (D) of the through-hole (12) in the sliding plate (6).

3. A three-way valve according to Claim 1, characterized in that the housing (1) is constructed with a front housing cover (2) and a rear housing cover (3), that the front housing cover (3) comprises a collecting chamber (14) from which holes (15) extend to the connection holes (11) of the gasket (4a) and that the rear housing cover (3) is equipped with flow channels (16) that connect the connection holes (11) of the gasket (4b) to an associated pipe connector opening (9), in which the flow cross-sections of holes (15) of the front housing cover (2) and the flow channels (16) in the rear housing cover (3) are equal in size.

4. A three-way valve according to one of Claims 1 to 3, characterized in that the sliding plate (6) and the gaskets (4a, 4b) consist of sintered ceramic material and that the gaskets are supported on elastomer housing seals (18) each of which surrounds an associated connection hole (11) in the form of a ring.

EP 0 310 841 B1

F i g.1

# Fig.2